# EUROPÄISCHE PATENTSCHRIFT

(11) **EP 3 128 624 B1**
(45) Veröffentlichungstag und Bekanntmachung des Hinweises auf die Patenterteilung: **06.05.2020**
(21) Anmeldenummer: 16182905.6
(22) Anmeldetag: 05.08.2016
(51) Int. Cl.: H01R 13/713, H02H 5/04, H01R 13/627

(54) **ÜBERSPANNUNGSSCHUTZGERÄTEENSEMBLE**
OVERVOLTAGE PROTECTION DEVICE ENSEMBLE
SYSTEME DE PARASURTENSEURS

(30) Priorität: 05.08.2015 DE 102015214969
(43) Veröffentlichungstag der Anmeldung: 08.02.2017
(73) Patentinhaber: PHOENIX CONTACT GmbH & Co. KG, 32825 Blomberg (DE)
(72) Erfinder: Dittert, Maik, 32107 Bad Salzuflen (DE); Schmutz, Jan-Erik, 32760 Detmold (DE)
(74) Vertreter: RCD Patent Giesen, Schmelcher & Griebel Patentwanwälte PartG mbB

(56) Entgegenhaltungen:
- WO-A1-2008/003532
- DE-A1-102011 052 213
- DE-U1-202004 006 227
- DE-U1-202010 012 860
- GB-A- 2 266 015
- US-A- 4 514 715

## Beschreibung

Die Erfindung betrifft ein Überspannungsschutzgeräteensemble.

Aus dem Stand der Technik sind unterschiedliche Überspannungsschutzgeräte bekannt.

Einige dieser Überspannungsschutzgeräte sind monolithisch aufgebaut, d.h. sie werden in einer Installation eingebaut und verdrahtet, andere Überspannungsschutzgeräte sind modular aufgebaut, d.h. sie verfügen über eine verdrahtbare Basis und ein Steckelement mit der eigentlichen Überspannungsschutzeinrichtung, die in die Basis gesteckt werden kann. Dabei erweist sich der modulare Aufbau als schnell wechselbar, wenn es zu einem Ausfall der Überspannungsschutzeinrichtung kommt.

Beispielsweise ist aus der DE 20 2010 012 860 U1 eine Gerätekombination zum Schutz vor Überspannungen mit einem U-förmigen Unterteil und einem mit diesem steckverbindbaren und ein Überspannungsschutzelement aufweisendem Steckmodul bekannt, wobei zwischen Steckmodul und Unterteil wirkende Haltemittel oder Rastmittel vorgesehen sind, die in Stecklage der Teile ineinander greifen und die durch Manipulation lösbar und/oder entrastbar sind, um das Steckmodul zu entnehmen.

Allerdings wirft der modulare Aufbau auch Probleme auf. Zum einen kommt es immer wieder vor, dass Steckelemente nicht richtig in die Basis eingesetzt sind, zum anderen kann auch durch elektromechanische Kräfte bei einem (Impuls-) Stromfluss der Kontakt zwischen dem Steckelement und der Basis beeinträchtigt oder gar unterbrochen werden. Auch muss sichergestellt sein, dass z.B. Vibrationen, wie sie bei einigen Einsatzfällen vorhanden sind, nicht zu einem Ausrütteln des Steckelementes aus der Basis führen. Diese Fehler sind nicht ohne weiteres zu erkennen.

Aus diesem Grund werden die Steckeinrichtungen und die Basis mit hoher Präzision ausgeführt, um eine möglichst genaue Passung zu erreichen. Zudem werden Halteelemente eingefügt, die ein versehentliches Lösen verhindern sollen. Allerdings ist festzustellen, dass die bisherigen Ansätze dazu geführt haben, dass Steckelemente nur unter großen Krafteinsatz bzw. mittels Werkzeug aus der Basis entfernt werden können. Ein hoher Krafteinsatz bedingt aber auch ein entsprechendes Design und einen entsprechenden Materialeinsatz, um eine Zerstörung der Basis zu vermeiden.

Weiterhin sind Überspannungsschutzgeräte zur Anzeige des Zustandes in aller Regel mit einer Statusanzeige auszustatten. Statusanzeigen per se benötigen jedoch einen gewissen Bauraum. Dies wiederspricht jedoch dem Nachfrage-Trend nach kleinen Baugrößen.

Der Erfindung liegt die Aufgabe zu Grunde, ein verbessertes und kostengünstiges Überspannungsschutzgeräteensemble zu schaffen, das einen Nachteil oder mehrere Nachteile aus dem Stand der Technik vermeidet.

Die Lösung der Aufgabe erfolgt erfindungsgemäß durch die Merkmale des unabhängigen Anspruchs. Vorteilhafte Ausgestaltungen der Erfindung sind in den Unteransprüchen und der Beschreibung angegeben.

Nachfolgend wird die Erfindung unter Bezugnahme auf die anliegende Zeichnung anhand bevorzugter Ausführungsformen näher erläutert.

Es zeigen
- Fig. 1: schematische Schnittdarstellungen im Verlauf und in Bezug auf Ausführungsformen der Erfindung,
- Fig. 2: schematische Schnittdarstellungen im Verlauf und in Bezug auf einen Aspekt der Ausführungsformen der Erfindung,
- Fig. 3: einen weiteren Aspekt von Ausführungsformen der Erfindung in einem ersten Zustand,
- Fig. 4: den weiteren Aspekt aus Fig. 3 in einer anderen Ausführungsform der Erfindung in einem zweiten Zustand,
- Fig. 5: schematische Schnittdarstellungen im Verlauf und in Bezug auf einen anderen Aspekt von Ausführungsformen der Erfindung,
- Fig. 6: Details eines Aspektes von Ausführungsformen der Erfindung
- Fig. 7: schematische Schnittdarstellungen im Verlauf und in Bezug auf das Detail aus Fig. 6 in Ausführungsformen der Erfindung,
- Fig. 8: schematische Schnittdarstellungen im Verlauf und in Bezug auf noch einen anderen Aspekt von Ausführungsformen der Erfindung,
- Fig. 9: schematische Schnittdarstellungen im Verlauf und in Bezug auf Ausführungsformen der Erfindung,
- Fig. 10: Details eines weiteren Aspektes von Ausführungsformen der Erfindung,
- Fig. 11: schematische Schnittdarstellungen im Verlauf und in Bezug auf das weitere Detail in Ausführungsformen der Erfindung,

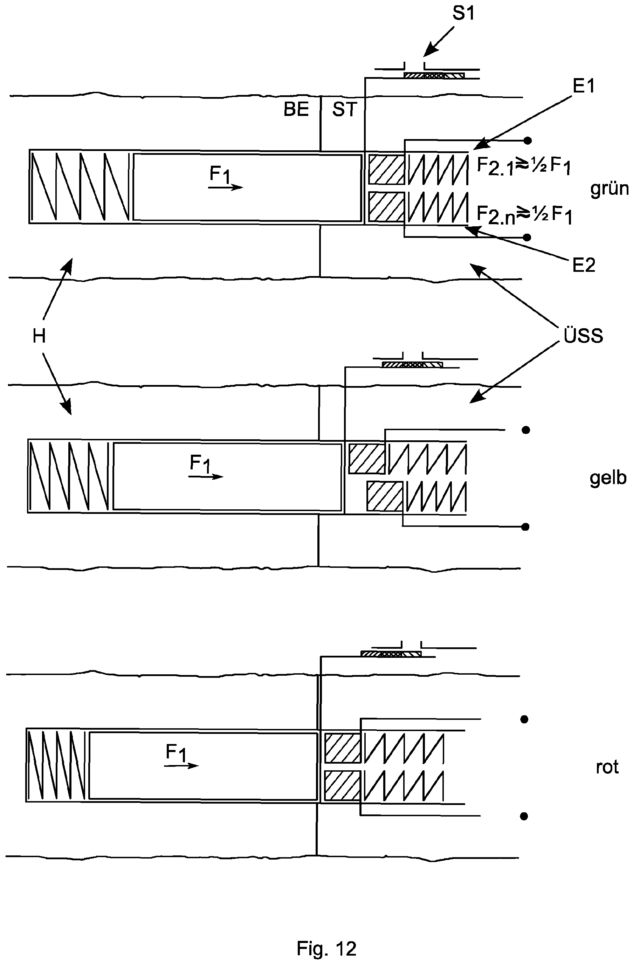

- Fig. 12: weitere schematische Schnittdarstellungen im Verlauf und in Bezug auf das weitere Detail in Ausführungsformen der Erfindung, und
- Fig. 13: ein weiterer Aspekt von Ausführungsformen der Erfindung.

Dabei sei angemerkt, dass die Darstellung nicht notwendigerweise als maßstäblich aufzufassen ist, sondern, dass die Dimensionen der einzelnen Komponenten auch anders ausgestaltet sein können. Insofern ist die nachfolgende Darstellung im Wesentlichen auf die Funktion ausgerichtet.

Soweit in den Figuren nachfolgend Referenzzeichen verwendet werden gelten diese - soweit nicht explizit etwas Abweichendes angegeben ist - für alle Ausführungsbeispiele fort.

Soweit nachfolgend der unbestimmte Artikel oder der Hinweis auf ein Element verwendet wird, ist dies nicht als limitierend aufzufassen, sondern umfasst jeweils auch eine Vielzahl von Elementen, soweit nicht explizit ein Element als lediglich einfach vorhanden bezeichnet ist.

Die Figuren zeigen unterschiedliche Aspekte der Erfindung.

Dabei ist in den Figuren jeweils ein Überspannungsschutzgeräteensemble 1 zumindest in Auszügen dargestellt. Ein erfindungsgemäßes Überspannungsschutzgeräteensemble 1 weist eine Halterung H zur Aufnahme eines Überspannungsschutzeinrichtungs-Steckers ÜSS und einen Überspannungsschutzeinrichtungs-Stecker ÜSS auf.

Die Halterung H ist dabei im Wesentlichen zur formschlüssigen Aufnahme des Überspannungsschutzeinrichtungs-Steckers (ÜSS) ausgebildet. Ohne weiteres kann die Halterung H beispielsweise auch weitere Elemente zur Befestigung, z.B. Bohrungen und/oder Einrichtungen zur Befestigung auf einer Montageschiene aufweisen.

Die Halterung H weist weiterhin eine Verriegelungseinrichtung V auf, die einen eingesteckten Überspannungsschutzeinrichtungs-Stecker ÜSS in der Halterung H hält, sodass dieser Überspannungsschutzeinrichtungs-Stecker ÜSS nicht (ohne weiteres) aus der Halterung entfernt werden kann.

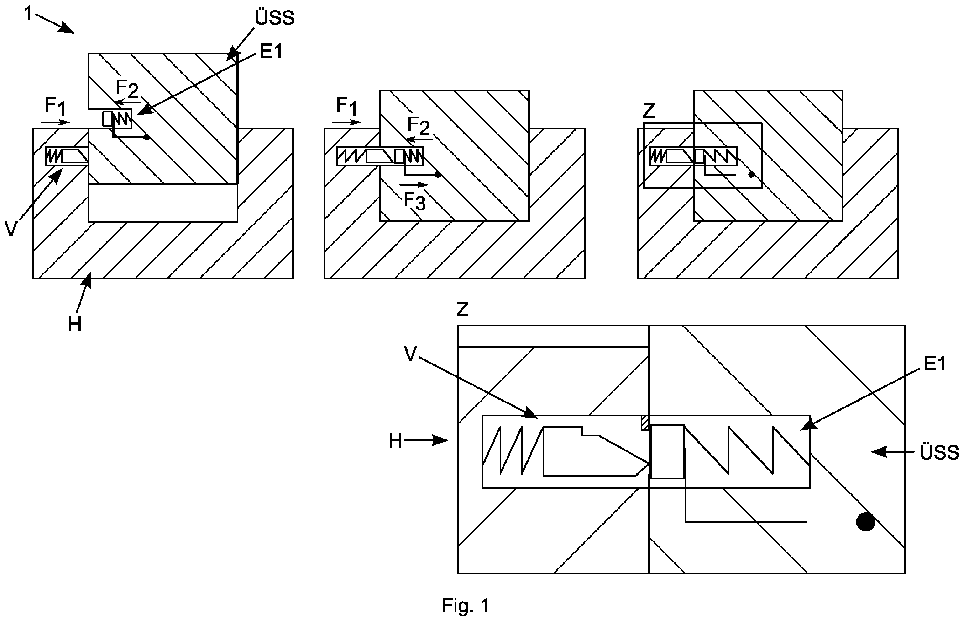

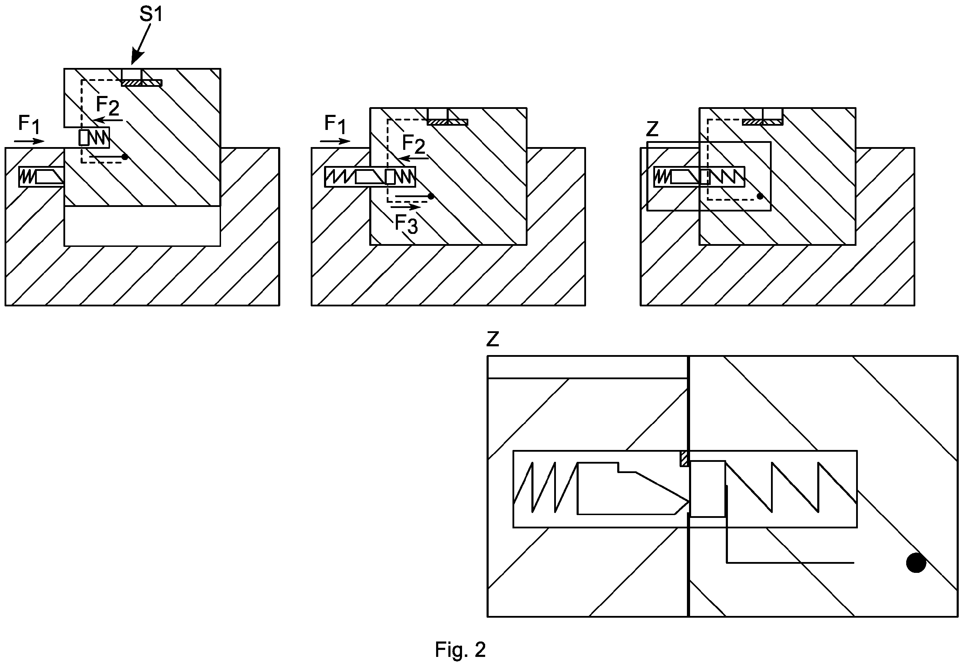

Der Überspannungsschutzeinrichtungs-Steckers ÜSS weist zumindest eine Überspannungsschutzeinrichtung ÜSE und zumindest eine erste Entriegelungseinrichtung E₁ auf (Figuren 1 und 2). Natürlich können auch mehr als eine Entriegelungseinrichtungen vorgesehen sein, wie später noch erläutert werden wird.

Die erste Entriegelungseinrichtung E₁ kann bei einem ersten Warnzustand der Überspannungsschutzeinrichtung ÜSE derartig auf die Verriegelungseinrichtung V wirken, dass der Überspannungsschutzeinrichtungs-Stecker ÜSS aus der Halterung H entfernt werden kann.

Wie unmittelbar einsichtig ist, kann, in einer nicht beanspruchten Ausführungsform, die Entriegelungseinrichtung E₁ und die Verriegelungseinrichtung V bzw. können die mehreren Entriegelungseinrichtungen E₁... Eₙ und/oder die mehreren Verriegelungseinrichtungseirichtungen V₁ ... Vₙ unterschiedlich verteilt sowohl auf der Halterung H bzw. dem Überspannungsschutzeinrichtungs-Stecker ÜSS angeordnet sein. Wesentlich für die Erfindung ist, dass im verriegelten Zustand der Überspannungsschutzeinrichtungs-Stecker ÜSS sicher in der Halterung gehalten werden kann, und dass die Entriegelungseinrichtung(en) im Warnzustand (und/oder auch bei anderen Zuständen und/oder durch manuelle Auslösung) diesen verriegelten Zustand verändern oder in einen entriegelten Zustand überführen kann bzw. können.

In Figur 1 oben sind drei Zustände gezeigt. Dabei entspricht der linke Zustand dem Einsetzen eines Überspannungsschutzeinrichtungs-Stecker ÜSS in eine Halterung H. Dabei kann z.B. wie in der Figur 1 links dargestellt der Überspannungsschutzeinrichtungs-Stecker ÜSS beim Einschieben in die Halterung H eine Verriegelungseinrichtung V gegen eine Feder schieben, wobei die Feder nun die Verriegelungseinrichtung V mit einer Kraft F₁ beaufschlagt. Ist der Stecker wie in der Figur 1 in der Mitte dargestellt vollständig (formschlüssig) eingesteckt, so verriegelt die Verriegelungseinrichtung V den Überspannungsschutzeinrichtungs-Stecker ÜSS in der Halterung H. Tritt nun ein Warnzustand auf, so wird die Entriegelungseinrichtung E₁ freigegeben, wie in Figur 1 oben rechts gezeigt. Die Freigabe kann z.B. thermisch, mechanisch, elektrisch, oder anderweitig erfolgen, z.B. durch Erweichen eines Klebers oder eines Lotes an einer Abtrennstelle. Die Entriegelungseinrichtung E₁ drückt mit einer Kraft F₂, welche z.B. ebenfalls durch eine Feder bereitgestellt wird, die Verriegelungseinrichtung V so zurück in die Halterung H, dass der Überspannungsschutzeinrichtungs-Stecker ÜSS aus der Halterung H entnommen werden kann. In der Figur 1 unten ist dieser Zustand nochmals detaillierter aufgezeigt, wobei hier eine beispielhafte keilförmige Ausformung der Verriegelungseinrichtung V gezeigt ist, die ein besonders einfaches Einschieben des Überspannungsschutzeinrichtungs-Stecker ÜSS ermöglicht und zugleich eine sichere Verriegelung bereitstellt. An der Halterung H kann zudem ein Anschlagblock vorgesehen sein, der verhindern kann, dass die Entriegelungseinrichtung E1 weiter vordringt, um so ein sicheres Entnehmen des Überspannungsschutzeinrichtungs-Steckers ÜSS aus der Halterung H zu ermöglichen.

Besonders einfach ist dies möglich, wenn die Entriegelungseinrichtung(en) E₁ kraftbeaufschlagt ist bzw. sind. Dabei kann die Krafbeaufschlagung beispielsweise mit einer Feder (wie in zahlreichen Figuren gezeigt) realisiert sein.

D.h. mit der Erfindung wird ein Überspannungsschutzgeräteensemble 1 vorgeschlagen, bei dem ein Überspannungsschutzeinrichtung-Stecker ÜSS in einer Halterung H als Basiselement automatisch verrastet werden kann, und bei dem ein defekter Überspannungsschutzeinrichtung-Stecker ÜSS automatisch entriegelt und ausgeworfen werden kann. Hierbei befindet sich beispielsweise ein federvorgespannter Verrast-Pin als Ausführungsbeispiel einer Verriegelungseinrichtung V (mit einer Kraft F₁) in einer Halterung H, der über einen Anschlag gehalten wird. Auf etwa gleicher Höhe im Überspannungsschutzeinrichtung-Stecker ÜSS kann sich mindestens ein Entrastungselement als Ausführungsbeispiel einer Entriegelungseinrichtung befinden, das beispielhaft federvorgespannt (mit einer Kraft |F₂|>|F₁|) ist und über eine Abtrennstelle (z.B. eine thermische Trennstelle) in Position gehalten wird. Die Abtrennstelle ist beispielhaft als schwarzer Punkt gezeigt. Die Abtrennstelle kann die Kraft F₂ kompensieren, d.h. der Zug der durch die Kraft F₂ ausgeübt wird, wird erst bei einer Auslösung der Trennstelle frei.

Löst die Abtrennstelle aus, so wird die Entriegelungseinrichtung aufgrund der Kraft F₂ bewegt. Da die Kraft F₂ betragsmäßig größer als die Kraft F₁ ist, wird die Verriegelungseinrichtung V zurück geschoben und gibt somit die Verrastung frei. Die Verriegelungseinrichtung V kann dabei derart ausgeführt sein, dass die schrägen Kontaktflächen eine horizontale Bewegung durch eine vertikale Bewegung des Steckers ermöglichen. Somit ist es möglich den Überspannungsschutzeinrichtung-Stecker ÜSS aus der Halterung H zu entfernen.

Weiterhin kann in Ausführungsformen der Erfindung vorgesehen sein, dass (wie z.B. in Figur 2 gezeigt) der Überspannungsschutzeinrichtungs-Steckers (ÜSS) zumindest eine erste Statusanzeige S₁ zur Anzeige eines Status der Überspannungsschutzeinrichtung ÜSE aufweist, wobei die erste Statusanzeige S₁ mit der ersten Entriegelungseinrichtung E₁ gekoppelt ist. Wird nun auf Grund eines Warnzustandes auf die Entriegelungseinrichtung E₁ eingewirkt, so wird nicht nur die Entriegelungseinrichtung E₁ betätigt, sondern auch die erste Statusanzeige S₁. Dabei ist anzumerken, dass wie in Figur 2 durch die gestrichelte Linie angedeutet, die Kopplung unterschiedlicher Natur sein kann, d.h. die Kopplung zwischen Statusanzeige S₁ und Entriegelungseinrichtung E₁ kann beispielsweise mechanisch, elektrisch, thermisch,... realisiert sein. Dabei sind in Figur 2 analog zur Figur 1 die unterschiedlichen Zustände aufgezeigt. Beispielsweise wird hier eine mechanisch-optische Anzeige mittels eines Kennfeldes realisiert, die in der linken und mittleren oberen Figur 2 einen ersten Zustand anzeigt und in der rechten einen zweiten Zustand (Warnzustand). Beispielsweise kann die erste Statusanzeige S₁ direkt an die Entriegelungseinrichtung E₁ gekoppelt sein und mittels Farbwechsel rot/grün den Defektzustand bzw. den Funktionszustand anzeigen.

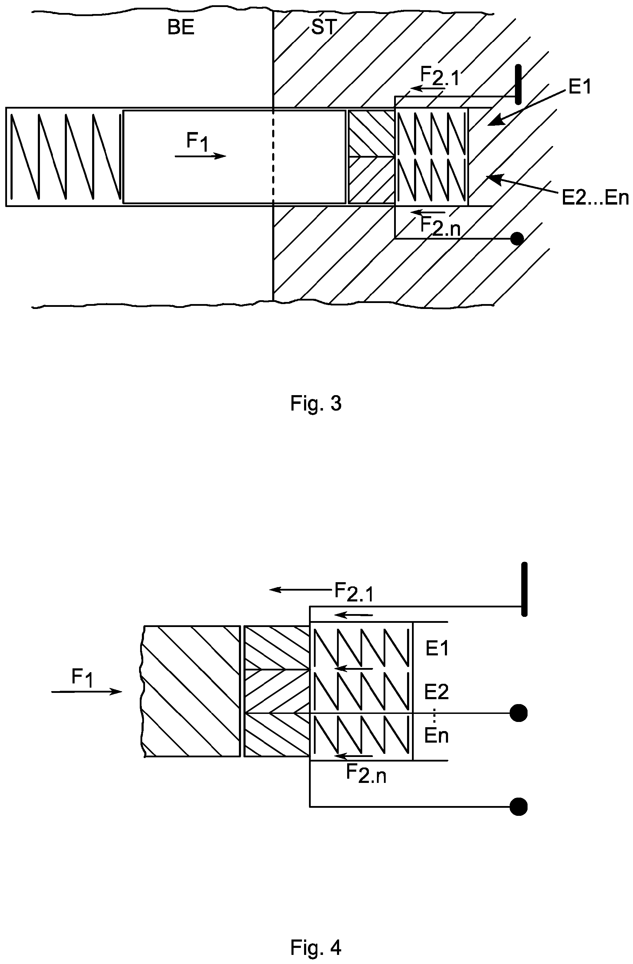

Wie bereits zuvor angedeutet, kann auch vorgesehen sein, dass mehr als eine Entriegelungseinrichtung vorgesehen ist. Beispielsweise ist in Figur 3 ein Beispiel mit zwei dargestellten Entriegelungseinrichtungen E₁, E₂ und in Figur 4 mit drei dargestellten Entriegelungseinrichtungen E₁, E₂, E₃ gezeigt.

D.h. es kann vorgesehen sein, dass der Überspannungsschutzeinrichtungs-Steckers ÜSS mindestens eine weitere Entriegelungseinrichtung E₂ aufweist, wobei die mindestens eine weitere Entriegelungseinrichtung E₂ einem zweiten Warnzustand zugeordnet ist, wobei die erste Entriegelungseinrichtung E₁ und die mindestens eine weitere Entriegelungseinrichtung E₂ "und" bzw. "oder" verknüpft derartig auf die Verriegelungseinrichtung(en) V einwirken können, sodass der Überspannungsschutzeinrichtungs-Stecker ÜSS aus der Halterung entfernt werden kann.

Beispielsweise kann durch die Federkräfte die jeweilige Funktion eingestellt werden. Ist die Kraft F₂ₙ einer Entriegelungseinrichtung Eₙ so groß, dass sie ausreicht, um die Kraft F₁ der Verriegelungseinrichtung V zu überwinden, so wird der Überspannungsschutzeinrichtungs-Stecker ÜSS unmittelbar entriegelt. Sind auch die weiteren Entriegelungseinrichtungen so ausgelegt kann damit eine "oder"-Funktion realisiert werden.

Ist hingegen beispielsweise die Kraft F_{2.1} der ersten Entriegelungseinrichtung E₁ und die Kraft F_{2.2} der zweiten Entriegelungseinrichtung E₂ jeweils nicht groß genug, dass sie ausreicht, um die Kraft F₁ der Verriegelungseinrichtung V zu überwinden, aber die Summe der Kräfte |F_{2.1}+F_{2.2}|>|F₁|, so wird der Überspannungsschutzeinrichtungs-Stecker ÜSS erst bei Anliegen mehrerer Kräfte entriegelt, und damit kann eine "und"-Funktion realisiert werden.

Offensichtlich kann die Vorgehensweise beliebig kombiniert werden, um bestimmte Zustände der Entriegelungseinrichtungen zur logischen Verknüpfung zu bringen.

In einem Beispiel wird angenommen, dass in Figur 3 zwei identische Entriegelungseinrichtungen E₂, Eₙ auf die Verriegelungseinrichtung V einwirken können. Die Federvorspannung F_{2.n} jedes einzelnen der mindestens zwei Entriegelungseinrichtungen E₂, E_{N} reicht aus die Verriegelungseinrichtung V in ihre "Nulllage" zu bewegen und den Überspannungsschutzeinrichtung-Stecker ÜSS frei zu geben, d.h. F_{2.n} > F₁. Jede Entriegelungseinrichtungen E₂, E_{N} kann an eine unabhängige Abtrennstelle (wie in Figur 4 bei E₂ und Eₙ gezeigt) gekoppelt sein, z.B. an eine thermische Trennstelle, Sicherung, Druckdetektor, optische oder elektrische Sensoren, etc. d.h. hier ist eine (mechanische) ODER-Verknüpfung realisiert. Andere Realisierungsformen der Abtrennstelle können alternativ oder zusätzlich auch eine thermische Ankopplung z.B. über einen intumeszenten Stoff, ein Bimetall oder ein sonstiges thermisch aktivierbares Element aufweisen. Zudem kann eine gemeinsame erste Statusanzeige S₁ (rot/grün) realisiert werden, indem jede Entriegelungseinrichtungen E₂, E_{N} auf die eine gemeinsame erste Statusanzeige S₁ wirkt und dieses (z.B. von Grün auf Rot) bewegen kann. Alternativ kann auch eine getrennte Statusanzeige realisiert werden, indem jeder Entriegelungseinrichtungen E₂, E_{N} eine eigene Statusanzeige zugeordnet ist und diese Statusanzeigen getrennt voneinander einen (grün-rot) Wechsel durchführen können. So wäre es möglich zu erkennen, welcher Abtrennstelle ausgelöst hat.

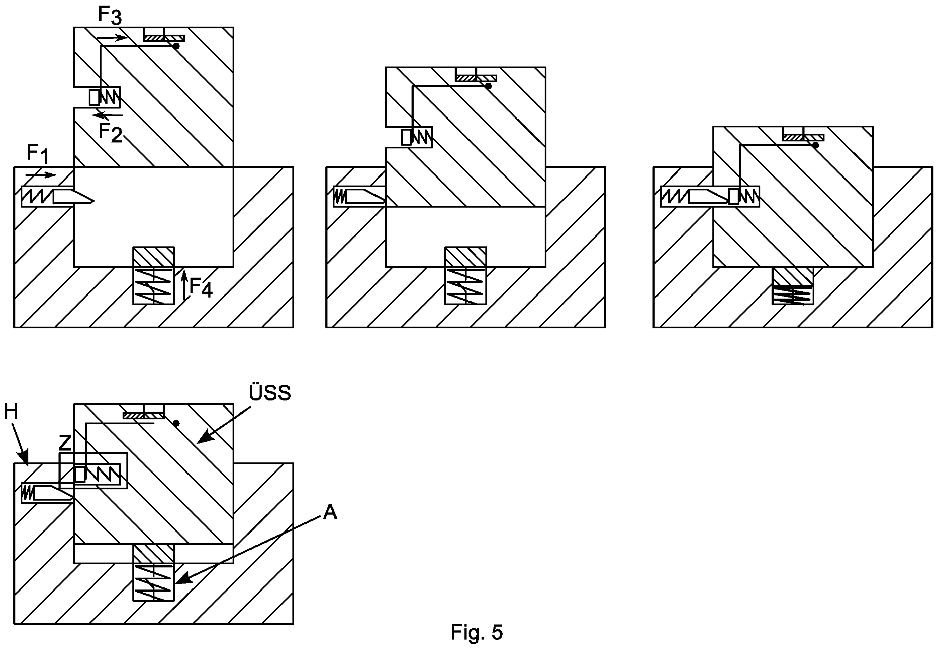

Gemäß einem Aspekt, der in Figur 5 gezeigt ist, kann vorgesehen sein, dass in der Halterung H ein Auswurfmechanismus A vorgesehen ist, der einen Überspannungsschutzeinrichtung-Stecker ÜSS im entriegelten Zustand aus der Halterung H drücken kann. So kann das Eindrücken des Auswurfmechanismus A beim Einstecken des Überspannungsschutzeinrichtungs-Steckers ÜSS genutzt werden, z.B. eine Feder zu spannen, oder aber zusätzlich auch andere Funktionen bereitzustellen, wie z.B. die mechanische und / oder elektrische Freigabe von Kontakten zur Kontaktierung mit entsprechenden Kontakten des Überspannungsschutzeinrichtungs-Steckers ÜSS. Beispielhaft kann der Auswurfmechanismus A in der Halterung H unterhalb eines Überspannungsschutzeinrichtung-Stecker ÜSS angeordnet sein. Vorteilhafterweise ist eine Feder im Auswurfmechanismus A vorgesehen, deren Kraft größer ist als die Haltekraft des Überspannungsschutzeinrichtung-Stecker ÜSS in der Halterung H, wobei allerdings hier die Verrastung durch die Verriegelungseinrichtung V (kraftmindernde) Berücksichtigung finden kann. Wie bereits zuvor in Bezug auf die Entriegelungseinrichtungen beschreiben, kann auch hier wiederum ein Anschlag vorgesehen sein, sodass der Auswurfmechanismus A und auch der Stecker ÜSS nicht aus der Halterung H fallen können.

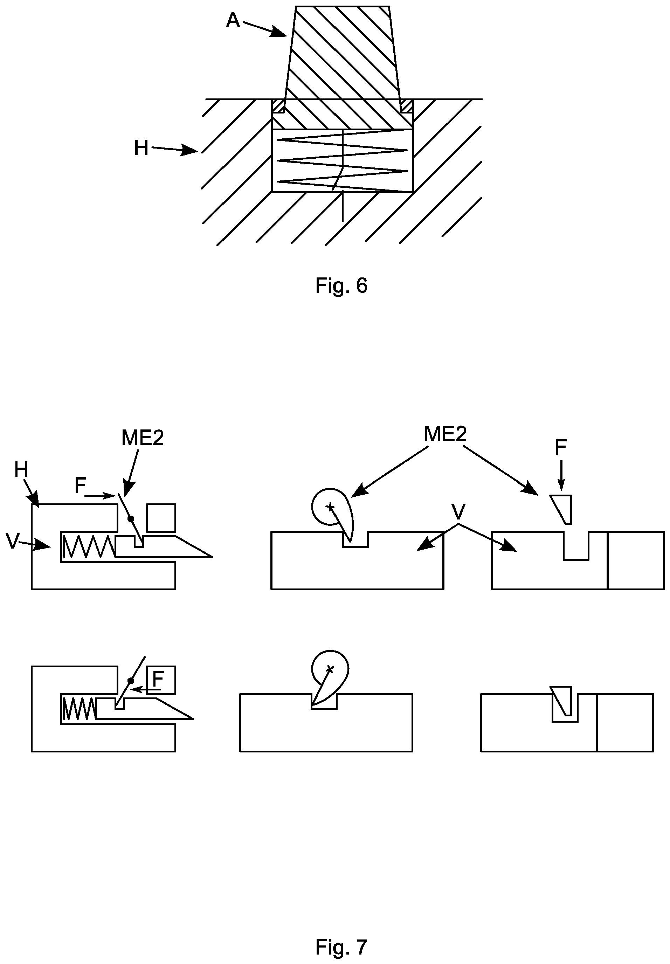

Weiterhin kann das Eindrücken des Auswurfmechanismus A auch zur Signalisierung des Zustandes "eingesetzter ÜSS" genutzt werden. Wird nun durch einen Warnzustand die Verriegelung gelöst, so wird der Stecker ÜSS durch den (vorgespannten) Auswurfmechanismus A aus der Halterung zumindest ein Stück herausgedrückt. Dies kann z.B. zur Unterbrechung der Kontakte (Abtrennung der Überspannungsschutzeinrichtung ÜSE) als auch zur Signalisierung (siehe angedeuteter Kontakt in Figur 6) mittels eines Fernmeldekontaktes verwendet werden. Hierzu kann ein Schalter mit dem Auswurfmechanismus A gekoppelt werden, so dass dieser Auswurfmechanismus A zeitgleich den Fernmeldekreis betätigt, wobei z.B. bei nicht gestecktem / ausgeworfenem Stecker der Fernmeldekreis geöffnet wird.

Natürlich stellt auch ein aus der Halterung H geschobener Überspannungsschutzeinrichtungs-Steckers ÜSS für sich eine Signalisierung bereit, denn typischerweise sind in Schaltanlagen eine Vielzahl von gleichartigen Überspannungsschutzgeräteensemblen 1 nebeneinander angebracht, sodass ein "ausgeworfener" Überspannungsschutzeinrichtungs-Steckers ÜSS bei Betrachtung auffällt.

Wie bereits angedeutet, kann der Überspannungsschutzeinrichtungs-Steckers ÜSS weiterhin eine mit externer Kraft zu beaufschlagende Entriegelungseinrichtung aufweisen. Dies kann z.B. per Hand oder mittels eines geeigneten Werkzeugs bedient werden und erlaubt es einen Überspannungsschutzeinrichtungs-Stecker ÜSS manuell aus einem Überspannungsschutzgeräteensemble 1 zu entnehmen, z.B. zu Prüf- und Wartungszwecken, etwa bei einer Isolationsmessung.

Ohne Beschränkung der Allgemeinheit kann auch die Halterung H alternativ oder zusätzlich eine mit externer Kraft zu beaufschlagende Entriegelungseinrichtung ME₂ aufweisen. Beispielhaft für diese "externen" Entriegelungseinrichtungen sei auf die Figur 7 verwiesen, die drei verschiedene Realisierungsformen solcher "externen" Entriegelungseinrichtungen zeigt, wobei in der Darstellung oben jeweils der verriegelte Zustand und unten jeweils der entriegelte Zustand gezeigt ist.

D.h. neben einem automatischen Auswurf kann auch ein manuelles Entfernen des Überspannungsschutzeinrichtungs-Steckers ÜSS ermöglicht werden, z.B. für Isolationsmessungen.

Beispielsweise ist auf der linken Seite der Figur 7 eine Anordnung für einen Schiebeschalter während in der Mitte der Figur 7 eine Drehknopfartige Anordnung und auf der rechten Seite der Figur 7 eine Auf-/Ab-Tasten-Anordnung als beispielhafte Ausführungsformen von mit externer Kraft zu beaufschlagende Entriegelungseinrichtung (für die Halterung H und/oder den Überspannungsschutzeinrichtungs-Stecker ÜSS) gezeigt ist.

Hierbei greift jeweils eine Mechanik in die Verriegelungseinrichtung V und verfährt diese Verriegelungseinrichtung V in die "Null-Position". Hierfür ist eine tastende Funktion ausreichend, da z.B. ein Auswurfmechanismus A den Stecker über die Verriegelungseinrichtung V hinaus schiebt und der Überspannungsschutzeinrichtungs-Stecker ÜSS somit nicht mehr in seine verrastende Position verfahren kann. Alle Lösungen können über ein Werkzeug bedienbar sein oder werkzeuglos ausgeführt werden.

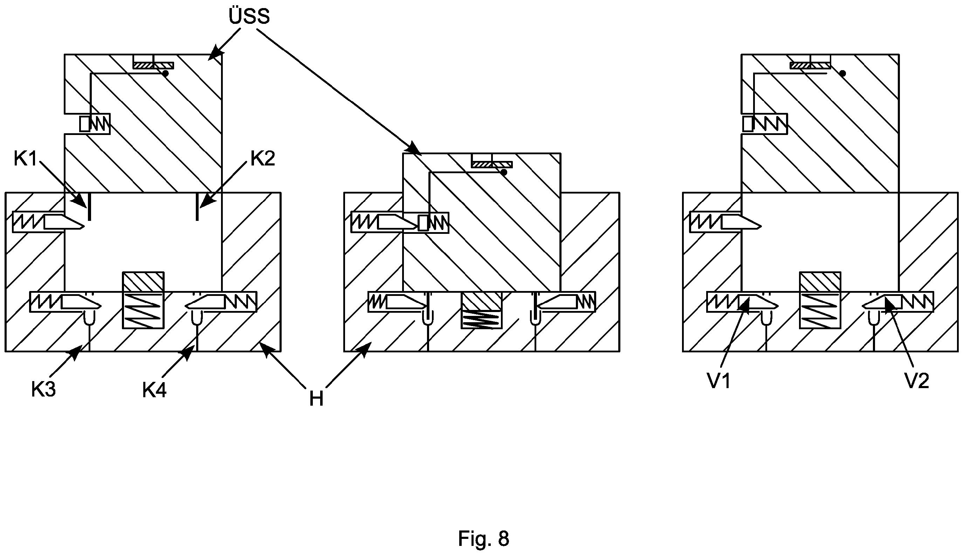

In weiteren Ausführungsformen kann - wie in Figur 8 gezeigt - vorgesehen sein, dass der Überspannungsschutzeinrichtung-Stecker ÜSS elektrische Verbindungseinrichtungen K₁, K₂ aufweist, und dass die Halterung H entsprechende kooperierende elektrischen Verbindungseinrichtungen K₃, K₄ aufweist.

Besonders vorteilhaft kann dabei vorgesehen sein, dass die kooperierenden elektrischen Verbindungseinrichtungen K₃, K₄ in der Halterung H bei nicht eingestecktem Überspannungsschutzeinrichtung-Stecker ÜSS durch Verschlusseinrichtungen V₁, V₂ vor Berührung geschützt sind.

In einer besonders vorteilhaften Weiterbildung dienen die Verschlusseinrichtungen V₁, V₂ zugleich als kraftbeaufschlagte Verriegelungseinrichtung V. D.h. die Verriegelungseinrichtung V kann zugleich im entriegelten Zustand den Berührschutz bilden, wodurch Bauteile eingespart werden können und gleichzeitig ein erhöhter Schutz bereitgestellt wird. D.h. die Verschlusseinrichtungen V₁, V₂ und die Verriegelungseinrichtung V können als ein Bauteil realisiert sein.

Zudem können dann die Verschlusseinrichtungen V₁, V₂ auch Lichtbögen unterdrücken, die bei einem Auswerfen des Überspannungsschutzeinrichtung-Steckers ÜSS aus der Halterung H entstehen könnten. D.h. die elektrischen Verbindungseinrichtungen K₁, K₂, K₃, K₄ dienen zusammen mit den Verschlusseinrichtungen V₁, V₂ zugleich als eine Abtrennvorrichtung mit erhöhter Löschfähigkeit. Da die eigentliche Abtrennung durch das Auswerfen des Überspannungsschutzeinrichtung-Stecker ÜSS erfolgen kann, können alle sonstigen Verbindungen sowohl in der Halterung H als auch im Überspannungsschutzeinrichtung-Stecker ÜSS als feste bzw. nichtlösbare Verbindungen ausgeführt sein.

Es sei weiterhin angemerkt, dass das Auswurfprinzip losgelöst von einer Verriegelung und der zuvor beschriebenen Situation auch als Abtrenneinrichtung allgemeiner Art verwendet werden kann. Insofern muss der Auswurfmechanismus A lediglich so gestaltet sein, dass ein Auswurf bei einem bestimmten Zustand freigegeben wird und es bedarf nicht zwingend einer Verriegelungseinrichtung.

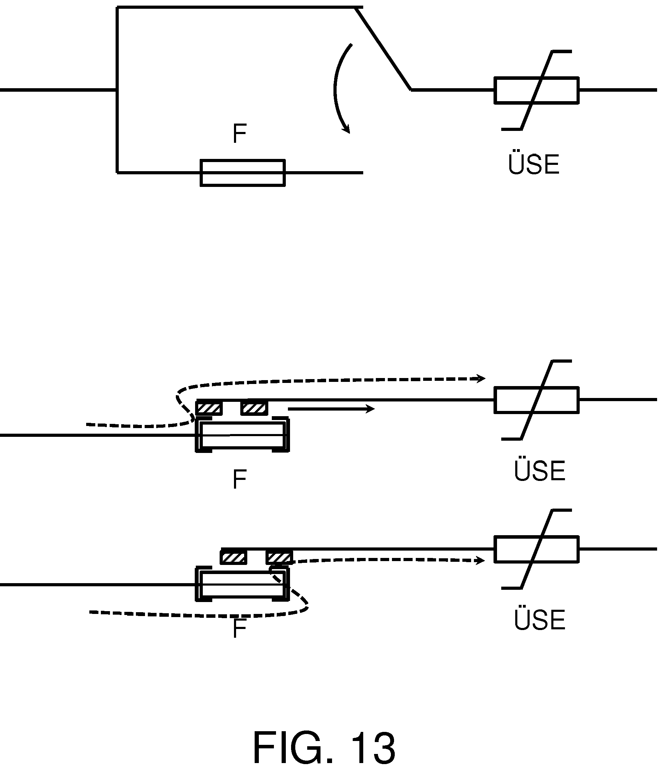

Vorteilhaft kann zudem vorgesehen sein, dass der Überspannungsschutzeinrichtung-Stecker ÜSS weiterhin eine Sicherung F aufweist, die, wenn der Überspannungsschutzeinrichtung-Stecker ÜSS nicht verriegelt in der Halterung H befindlich ist, in Reihe mit der Überspannungsschutzeinrichtung ÜSE geschaltet ist, und, wenn der Überspannungsschutzeinrichtung-Stecker ÜSS verriegelt in der Halterung H befindlich ist, funktionslos ist. Funktional kann dabei die notwendige Schaltvorrichtung mit der Verriegelungseinrichtung V und / oder dem Auswurfmechanismus A verbunden sein. Dies hat den Vorteil, dass zum einen ein Stoßstrom nicht über die Sicherung F geführt werden muss und die Sicherung somit einen sehr kleinen Sicherungsnennwert aufweisen kann, zum anderen stellt die Sicherung F eine große Schaltleistung zur Verfügung. Der Lichtbogen, der zwischen Überspannungsschutzeinrichtung-Stecker ÜSS und der Halterung H entsteht wenn die steckschwertartigen elektrischen Verbindungseinrichtungen K₁, K₂ aus den tulpenartigen Verbindungseinrichtungen K₃, K₄ gefahren werden, kann somit schnell gelöscht werden. Dieses Prinzip ist besonders für Anwendungen in Gleichspannungsnetzen interessant. Ein elektrisches Ersatzschaltbild ist beispielhaft in Figur 13 oben dargestellt.

Durch die obige Ausgestaltung kann bei einem Fehler der Überspannungsschutzeinrichtung ÜSE die Sicherung F in Reihe zur Überspannungsschutzeinrichtung ÜSE geschaltet werden. Ein z.B. thermisch-aktivierter Schalter, öffnet dann den (vorherigen direkten) Hauptstrompfad und schließt den Kontakt zu einer dann in Reihe geschalteten Sicherung/einem Sicherungselement. D.h. nur im Fehlerfall ist die Sicherung F stromdurchflossen (siehe Figur 13 unten, Stromfluss durch gestrichelten Pfeil angedeutet), während die Sicherung F im normalen Betriebsfall (siehe Figur 13 Mitte, Stromfluss durch gestrichelten Pfeil angedeutet) nicht stromdurchflossen ist. Daher muss die Sicherung F nicht auf den maximalen Stoßstrom ausgelegt sein, sondern kann sehr klein bemessen sein (z.B. 10 mA bis 100 mA), was gleichbedeutend mit einem geringen Schmelzintegral ist, d.h. lediglich die maximal benötigte Löschfähigkeit muss durch die Sicherung S gegeben sein. Da die Sicherung F in Reihe zu der beschädigten Überspannungsschutzeinrichtung ÜSE geschaltet wird, muss das Durchlassintegral der Sicherung F noch über die Überspannungsschutzeinrichtung ÜSE fließen. Durch einen sehr kleinen zu wählenden Sicherungsnennwert und das geringe Schmelzintegral, ist dieses aber nahezu vernachlässigbar und die Belastung für die beschädigte Überspannungsschutzeinrichtung ÜSE gering.

In einer beispielhaften Ausführungsform, welche in Figur 13 Mitte und unten gezeigt ist, wird der Schalter als Schiebeschalter in Bezug auf eine klassische Sicherung F ausgestaltet, wobei bei einer Auslösung des Schalters der Kontakt auf einer Seite der Sicherung gelöst wird und auf einer anderen Seite hergestellt wird.

In gleicher Weise kann auch (zeitversetzt) zusätzlich die beschädigte Überspannungsschutzeinrichtung ÜSE kurzgeschlossen werden, wobei alle Vorgänge - Abtrennen, Aktivieren der Sicherung F und Schalten des Kurzschlusses - mit einer gemeinsamen Mechanik realisiert werden können.

Es sei auch hier angemerkt, dass das Schaltprinzip losgelöst von einer Verriegelung und der zuvor beschriebenen Situation auch als Schaltprinzip allgemeiner Art verwendet werden kann. Insofern bedarf es nicht zwingend einer Verriegelungseinrichtung.

Ohne weiteres kann auch vorgesehen sein, dass die erste Statusanzeige S₁ mehr als eine binäre Zustands-Änderung, z.B. zumindest einen ersten Zustand Z₁, eine zweiten Zustand Z₂ und einen dritten Zustand Z₃ anzeigen kann. Solche Funktionalitäten können z.B. über eine "und"-Schaltung realisiert werden und z.B. dazu verwendet werden neben einem voll-funktionsfähigem Zustand, einen vorgeschädigten Zustand und einen funktionsunfähigen Zustand anzuzeigen. Natürlich ist es auch denkbar weiter Zustände anzuzeigen.

D.h. so kann z.B. der erste Warnzustand eine Vorschädigung, z.B. eine gewissen Energieeintrag anzeigen, während ein anderer (zweiter) Warnzustand eine Funktionsstörung und / oder ein Lebensdauerende, anzeigt.

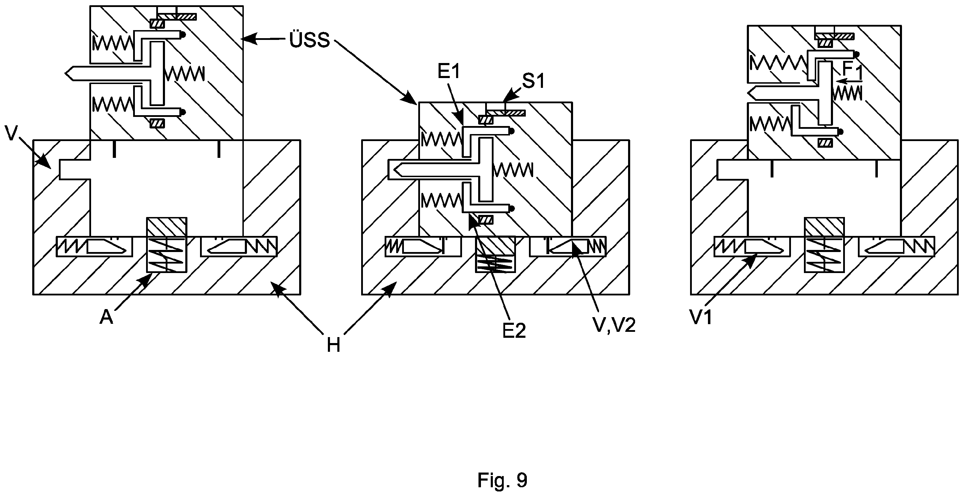

Wie zuvor beschrieben kann, in einer nicht beanspruchten Ausführungsform, die Anordnung von Verriegelungseinrichtung V und Entriegelungseinrichtungen unterschiedlich gestaltet sein. In Figur 9 befindet sich sowohl ein Verrast-Pin als Teil der Verriegelungseinrichtung V als auch die thermisch angekoppelte Entriegelungseinrichtungen im Überspannungsschutzeinrichtung-Stecker ÜSS. Der Verrast-Pin als Teil der Verriegelungseinrichtung V kann federvorgespannt sein und beim Einstecken des Überspannungsschutzeinrichtung-Stecker ÜSS in die Halterung H in eine entsprechende Öffnung eingreifen. Die Entriegelungseinrichtungen E₁, E₂ greifen hinter den Verrast-Pin als Teil der Verriegelungseinrichtung V und ziehen diesen bei Auslösung einer Abtrennstelle zurück, wodurch der Überspannungsschutzeinrichtung-Stecker ÜSS wieder freigegeben wird.

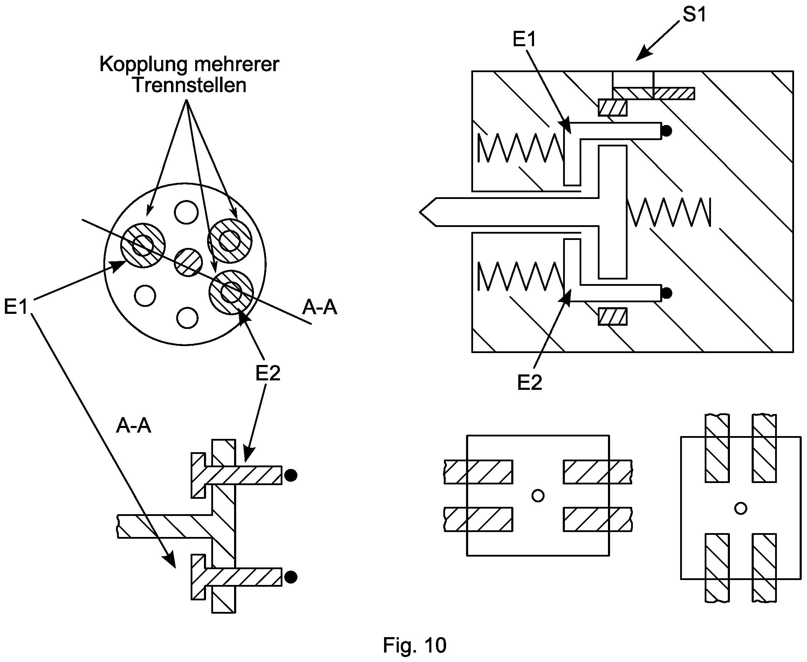

Natürlich können wieder mehrere Entriegelungseinrichtungen E₁, E₂ wie in Figur 10 gezeigt gekoppelt werden, z.B. indem der Verrast-Pin als Teil der Verriegelungseinrichtung V z.B. als Lochscheibe ausgestaltet wird und die Entriegelungseinrichtungen E₁, E₂ durch diese hindurch gesteckt werden. Dabei kann die Kombination mehrerer Entriegelungseinrichtungen sowohl als UND als auch als ODER-Schaltung erfolgen. Zusätzlich können diese beiden Schaltungstypen kombiniert werden. Dabei kann z.B. jede Entriegelungseinrichtung federvorgespannt sein und auf einen Verrast-Pin wirken.

Wiederum kann über das Verhältnis der Federkräfte der einzelnen Entriegelungseinrichtungen E₁, E₂ zu der Verriegelungseinrichtung V die verschiedenen Schaltungstypen realisiert werden, wobei die jeweilige Federkraft sowohl durch unterschiedliche Federkonstanten als auch durch Einstellung der Vorspannkraft erfolgen kann.

Wird die Federkraft einer Entriegelungseinrichtung größer oder gleich der Verriegelungseinrichtung V gewählt (z.B. |F_{2.1}|>=|F₁|), so wird die Verriegelungseinrichtung V sofort gelöst und die erste Statusanzeige S₁ wechselt.

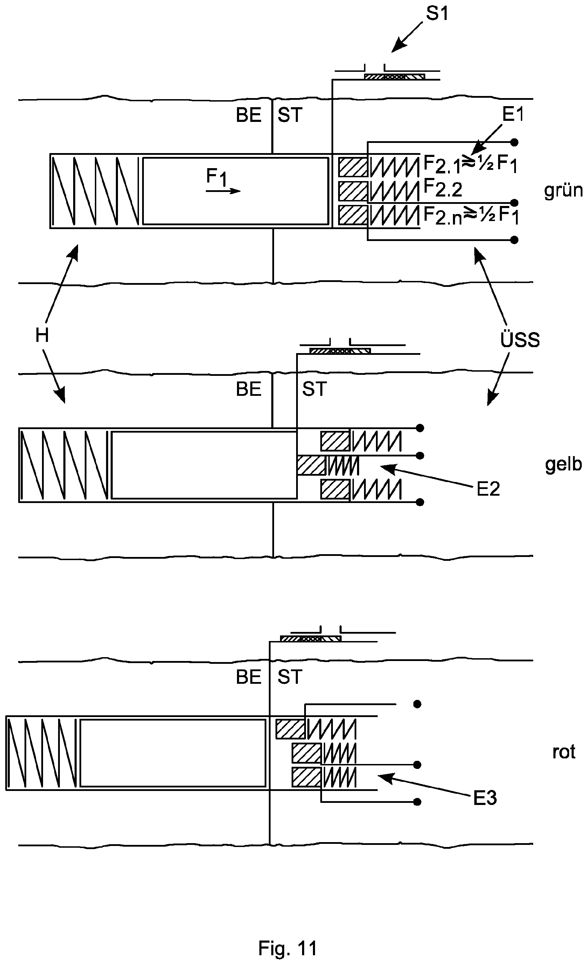

Wird die Federkraft einer Entriegelungseinrichtung kleiner der Verriegelungseinrichtung V gewählt, z.B. |F_{2.1}|= |F_{2.2}|∼ 1/2 |F₁|), so kann z.B. wie im Beispiel der Figur 11 dies dazu genutzt werden, dass die Statusanzeige S₁ von einem ersten Zustand Z₁ dargestellt oben nun in einen zweiten (Zwischen-) Zustand Z₂ wechselt (gelb), der z.B. eine entsprechende Vorschädigung anzeigt. Werden jedoch zwei (oder mehr) Abtrennstellen aktiviert, wie in Figur 11 unten gezeigt, so kann dies zu einer Änderung der ersten Statusanzeige S₁ auf einen Fehlfunktionszustand entsprechend einem dritten Zustand Z₃ (rot) nach sich ziehen.

**Bezugszeichenliste**

| | |
|---|---|
| Überspannungsschutzgeräteensemble | 1 |
| Halterung | H |
| Überspan nu ngsschutzei nrichtu ngs-Steckers | ÜSS |
| Verriegelungseinrichtung | V |
| Entriegelungseinrichtung | E₁, E₂ ... Eₙ |
| Überspannungsschutzeinrichtung | ÜSE |
| Statusanzeige | S₁ |
| Auswurfmechanismus | A |
| mit externer Kraft zu beaufschlagende Entriegelungseinrichtung | ME₂ |
| elektrische Verbindungseinrichtungen | K₁, K₂ K₃, K₄ |
| Zustand | Z₁, Z₂, Z₃ |
| Sicherung F | |

## Patentansprüche

1. Überspannungsschutzgeräteensemble (1) aufweisend eine Halterung (H) zur Aufnahme eines Überspannungsschutzeinrichtungs-Steckers (ÜSS) und einen Überspannungsschutzeinrichtungs-Stecker (ÜSS),
• wobei die Halterung (H) zur im Wesentlichen formschlüssigen Aufnahme des Überspannungsschutzeinrichtungs-Steckers (ÜSS) ausgebildet ist,
• wobei die Halterung (H) eine Verriegelungseinrichtung (V) aufweist, die einen eingesteckten Überspannungsschutzeinrichtungs-Stecker (ÜSS) in der Halterung (H) hält, sodass dieser nicht aus der Halterung entfernt werden kann,
**dadurch gekennzeichnet, dass**
• der Überspannungsschutzeinrichtungs-Stecker (ÜSS) eine Überspannungsschutzeinrichtung (ÜSE) und eine erste Entriegelungseinrichtung (E₁) aufweist, wobei die erste Entriegelungseinrichtung (E₁) bei einem ersten Warnzustand der Überspannungsschutzeinrichtung (ÜSE) derartig auf die Verriegelungseinrichtung (V) einwirken kann, dass der Überspannungsschutzeinrichtungs-Stecker (ÜSS) aus der Halterung entfernt werden kann.

2. Überspannungsschutzgeräteensemble (1) nach Anspruch 1, **dadurch gekennzeichnet, dass** die Entriegelungseinrichtung (E₁) kraftbeaufschlagt ist.

3. Überspannungsschutzgeräteensemble (1) nach Anspruch 1 oder 2, **dadurch gekennzeichnet, dass** der Überspannungsschutzeinrichtungs-Stecker (ÜSS) eine erste Statusanzeige (S₁) zur Anzeige eines Status der Überspannungsschutzeinrichtung (ÜSE) aufweist, wobei die erste Statusanzeige (S₁) mit der ersten Entriegelungseinrichtung (E₁) gekoppelt ist.

4. Überspannungsschutzgeräteensemble (1) nach einem der vorhergehenden Ansprüche, **dadurch gekennzeichnet, dass** der Überspannungsschutzeinrichtungs-Stecker (ÜSS) mindestens eine weitere Entriegelungseinrichtung (E₂) aufweist, wobei die mindestens eine weitere Entriegelungseinrichtung (E₂) einem zweiten Warnzustand zugeordnet ist, wobei die erste Entriegelungseinrichtung (E₁) und die mindestens eine weitere Entriegelungseinrichtung (E₂) "oder" verknüpft derartig auf die Verriegelungseinrichtung (V) einwirken können, sodass, wenn entweder die erste Entriegelungseinrichtung (E₁) oder die mindestens eine weitere Entriegelungseinrichtung (E₂) auf die Verriegelungseinrichtung (V) einwirken, der Überspannungsschutzeinrichtungs-Stecker (ÜSS) aus der Halterung entfernt werden kann.

5. Überspannungsschutzgeräteensemble (1) nach einem der vorhergehenden Ansprüche 1 bis 3, **dadurch gekennzeichnet, dass** der Überspannungsschutzeinrichtungs-Stecker (ÜSS) mindestens eine weitere Entriegelungseinrichtung (E₂) aufweist, wobei die mindestens eine weitere Entriegelungseinrichtung (E₂) einem zweiten Warnzustand zugeordnet ist, wobei die erste Entriegelungseinrichtung (E₁) und die mindestens eine weitere Entriegelungseinrichtung (E₂) "und" verknüpft derartig auf die Verriegelungseinrichtung (V) einwirken können, sodass der Überspannungsschutzeinrichtungs-Stecker (ÜSS), wenn sowohl die erste Entriegelungseinrichtung (E₁) als auch die mindestens eine weitere Entriegelungseinrichtung (E₂) auf die Verriegelungseinrichtung (V) einwirken, aus der Halterung entfernt werden kann.

6. Überspannungsschutzgeräteensemble (1) nach einem der vorhergehenden Ansprüche, **dadurch gekennzeichnet, dass** in der Halterung (H) ein Auswurfmechanismus (A) angeordnet ist, der einen Überspannungsschutzeinrichtung-Stecker (ÜSS) im entriegelten Zustand aus der Halterung (H) drücken kann.

7. Überspannungsschutzgeräteensemble (1) nach Anspruch 6, **dadurch gekennzeichnet, dass** der Auswurfmechanismus (A) mit einer Fernmeldeeinrichtung verbunden ist.

8. Überspannungsschutzgeräteensemble (1) nach einem der vorhergehenden Ansprüche, **dadurch gekennzeichnet, dass** der Überspannungsschutzeinrichtung-Stecker (ÜSS) weiterhin eine mit externer Kraft zu beaufschlagende Entriegelungseinrichtung aufweist.

9. Überspannungsschutzgeräteensemble (1) nach einem der vorhergehenden Ansprüche, **dadurch gekennzeichnet, dass** die Halterung (H) weiterhin eine mit externer Kraft zu beaufschlagende Entriegelungseinrichtung (ME₂) aufweist.

10. Überspannungsschutzgeräteensemble (1) nach einem der vorhergehenden Ansprüche, **dadurch gekennzeichnet, dass** der Überspannungsschutzeinrichtung-Stecker (ÜSS) elektrische Verbindungseinrichtungen (K₁,K₂) aufweist, und dass die Halterung entsprechende kooperierende elektrische Verbindungseinrichtungen (K₃,K₄) aufweist.

11. Überspannungsschutzgeräteensemble (1) nach Anspruch 10, **dadurch gekennzeichnet, dass** die kooperierenden elektrischen Verbindungseinrichtungen (K₃,K₄) in der Halterung (H) bei nicht eingestecktem Überspannungsschutzeinrichtung-Stecker (ÜSS) durch Verschlusseinrichtungen (V₁,V₂) vor Berührung geschützt sind.

12. Überspannungsschutzgeräteensemble (1) nach Anspruch 11, **dadurch gekennzeichnet, dass** die Verschlusseinrichtungen (V₁,V₂) zugleich als kraftbeaufschlagte Verriegelungseinrichtung (V) dient.

13. Überspannungsschutzgeräteensemble (1) nach Anspruch 11 oder 12, **dadurch gekennzeichnet, dass** die elektrischen Verbindungseinrichtungen (K₁,K₂,K₃,K₄) zusammen mit den Verschlusseinrichtungen (V₁,V₂) zugleich als eine Abtrennvorrichtung mit erhöhter Löschfähigkeit dienen.

14. Überspannungsschutzgeräteensemble (1) nach einem der vorhergehenden Ansprüche, **dadurch gekennzeichnet, dass** der Überspannungsschutzeinrichtung-Stecker (ÜSS) weiterhin eine Sicherung (F) aufweist, die, wenn der Überspannungsschutzeinrichtung-Stecker (ÜSS) nicht verriegelt in der Halterung (H) befindlich ist in Reihe mit der Überspannungsschutzeinrichtung (ÜSE) geschaltet ist, und wenn der Überspannungsschutzeinrichtung-Stecker (ÜSS) verriegelt in der Halterung (H) befindlich ist funktionslos ist.

15. Überspannungsschutzgeräteensemble (1) nach einem der vorhergehenden Ansprüche 3 bis 14, **dadurch gekennzeichnet, dass** die erste Statusanzeige (S₁) zumindest einen ersten Zustand (Z₁), eine zweiten Zustand (Z₂) und einen dritten Zustand (Z₃) anzeigen kann.

16. Überspannungsschutzgeräteensemble (1) nach einem der vorhergehenden Ansprüche, **dadurch gekennzeichnet, dass** der erste Warnzustand eine Funktionsstörung und/oder ein Lebensdauerende anzeigt.

## Claims

1. A surge protection apparatus assembly (1) having a socket (H) for receiving a surge protection device plug (ÜSS), and a surge protection device plug (ÜSS),
• wherein the socket (H) is designed for receiving the surge protection device plug (USS) in an essentially form-fitting manner,
• wherein the socket (H) has a locking device (V) that holds a plugged-in surge protection device plug (USS) in the socket (H) such that it cannot be removed from the bracket,
**characterized in that**
• the surge protection device plug (ÜSS) has a surge protection device (USE) and a first release device (E₁), wherein the first release device (E₁), in a first warning state of the surge protection device (ÜSE), can act upon the locking device (V) in such a manner that the surge protection device plug (ÜSS) can be removed from the socket.

2. The surge protection apparatus assembly (1) according to Claim 1, **characterized in that** the release device (E₁) is subjected to a force.

3. The surge protection apparatus assembly (1) according to Claim 1 or 2, **characterized in that** the surge protection device plug (ÜSS) has a first status indicator (S₁) for indicating a status of the surge protection device (ÜSE), wherein the first status indicator (S₁) is coupled with the first release device (E₁).

4. The surge protection apparatus assembly (1) according to any one of the preceding claims, **characterized in that** the surge protection device plug (ÜSS) has at least one further release device (E₂), wherein the at least one further release device (E₂) is associated with a second warning status, wherein the first release device (E₁) and the at least one other release device (E₂) are in a logical OR relationship and can act upon the locking device (V) such that the surge protection device plug (ÜSS) can be removed from the socket if either the first release device (E₁) or the at least one other release device (E₂) act upon the locking device (V).

5. The surge protection apparatus assembly (1) according to any one of the preceding Claims 1 to 3, **characterized in that** the surge protection device plug (ÜSS) has at least one further release device (E₂), wherein the at least one further release device (E₂) is associated with a second warning status, wherein the first release device (E₁) and the at least one other release device (E₂) are in a logical AND relationship and can act upon the locking device (V) such that the surge protection device plug (ÜSS) can be removed from the socket if both the first release device (E₁) and the at least one other release device (E₂) act upon the locking device (V).

6. The surge protection apparatus assembly (1) according to any one of the preceding claims, **characterized in that** an ejection mechanism (A) is arranged in the socket (H), which mechanism can push a surge protection device plug (ÜSS) from the bracket (H) in its unlocked state.

7. The surge protection apparatus assembly (1) according to Claim 6, **characterized in that** the ejection mechanism (A) is connected to a telecommunications device.

8. The surge protection apparatus assembly (1) according to any one of the preceding claims, **characterized in that** the surge protection device plug (ÜSS) furthermore has a release device which is to be subjected to an external force.

9. The surge protection apparatus assembly (1) according to any one of the preceding claims, **characterized in that** the socket (H) furthermore has a release device (ME₂) which is to be subjected to an external force.

10. The surge protection apparatus assembly (1) according to any one of the preceding claims, **characterized in that** the surge protection device plug (ÜSS) has electrical connection devices (K₁, K₂) and that the socket has electrical connection devices (K₃, K₄) that interact correspondingly with the former.

11. The surge protection apparatus assembly (1) according to Claim 10, **characterized in that** the cooperating electrical connection devices (K₃, K₄) are protected from contact in the bracket (H) by closing devices (V₁, V₂) when the surge protection device plug (ÜSS) is not plugged in.

12. The surge protection apparatus assembly (1) according to Claim 11, **characterized in that** the closing devices (V₁, V₂) also serve as a force-loaded locking device (V) .

13. The surge protection apparatus assembly (1) according to Claim 11 or 12, **characterized in that** the electrical connection devices (K₁, K₂, K₃, K₄) together with the locking devices (V₁, V₂) at the same time serve as a separating device with high extinguishing capabilities.

14. The surge protection apparatus assembly (1) according to any one of the preceding claims, **characterized in that** the surge protection device plug (ÜSS) furthermore has a fuse (F) which is connected in series with the surge protection device (USE) when the surge protection device plug (ÜSS) is not locked in the socket (H), and which is non-functional if the surge protection device plug (ÜSS) is locked in the socket (H).

15. The surge protection apparatus assembly (1) according to any one of the preceding Claims 3 to 14, **characterized in that** the first status display (S₁) is able to display at least a first status (Z₁), a second status (Z₂) and a third status (Z₃).

16. The surge protection apparatus assembly (1) according to any one of the preceding claims, **characterized in that** the first warning status indicates a malfunction and/or an end of the service life.

## Revendications

1. Ensemble d'appareils de protection contre les surtensions (1) présentant un support (H) pour la réception d'un connecteur de dispositif de protection contre les surtensions (ÜSS) et un connecteur de dispositif de protection contre les surtensions (ÜSS),
• dans lequel le support (H) est réalisé pour la réception sensiblement par conjugaison de formes du connecteur de dispositif de protection contre les surtensions (ÜSS),
• dans lequel le support (H) présente un dispositif de verrouillage (V) qui maintient un connecteur de dispositif de protection contre les surtensions (ÜSS) enfiché dans le support (H) de telle sorte que celui-ci ne peut pas être retiré du support,
**caractérisé en ce que**
• le connecteur de dispositif de protection contre les surtensions (ÜSS) présente un dispositif de protection contre les surtensions (ÜSE) et un premier dispositif de déverrouillage (E₁), dans lequel le premier dispositif de déverrouillage (E₁) peut, en cas d'un premier état d'alerte du dispositif de protection contre les surtensions (ÜSE), agir sur le dispositif de verrouillage (V) de telle sorte que le connecteur de dispositif de protection contre les surtensions (ÜSS) peut être retiré du support.

2. Ensemble d'appareils de protection contre les surtensions (1) selon la revendication 1, **caractérisé en ce que** le dispositif de déverrouillage (E₁) est sollicité par une force.

3. Ensemble d'appareils de protection contre les surtensions (1) selon la revendication 1 ou 2, **caractérisé en ce que** le connecteur de dispositif de protection contre les surtensions (ÜSS) présente un premier indicateur d'état (S₁) pour indiquer un état du dispositif de protection contre les surtensions (ÜSE), dans lequel le premier indicateur d'état (S₁) est couplé avec le premier dispositif de déverrouillage (E₁).

4. Ensemble d'appareils de protection contre les surtensions (1) selon l'une des revendications précédentes, **caractérisé en ce que** le connecteur de dispositif de protection contre les surtensions (ÜSS) présente au moins un autre dispositif de déverrouillage (E₂), dans lequel l'au moins un autre dispositif de déverrouillage (E₂) est associé à un deuxième état d'alerte, dans lequel le premier dispositif de déverrouillage (E₁) et l'au moins un autre dispositif de déverrouillage (E₂) liés par une relation de type « ou » peuvent agir sur le dispositif de verrouillage (V) de telle sorte que, si le premier dispositif de déverrouillage (E₁) ou l'au moins un autre dispositif de déverrouillage (E₂) agissent sur le dispositif de verrouillage (V), le connecteur de protection contre les surtensions (ÜSS) peut être retiré du support.

5. Ensemble d'appareils de protection contre les surtensions (1) selon l'une des revendications 1 à 3 précédentes, **caractérisé en ce que** le connecteur de dispositif de protection contre les surtensions (ÜSS) présente au moins un autre dispositif de déverrouillage (E₂), dans lequel l'au moins un autre dispositif de déverrouillage (E₂) est associé à un deuxième état d'alerte, dans lequel le premier dispositif de déverrouillage (E₁) et l'au moins un autre dispositif de déverrouillage (E₂) liés par une relation de type « et » peuvent agir sur le dispositif de verrouillage (V) de telle sorte que le connecteur de dispositif de protection contre les surtensions (ÜSS), lorsque le premier dispositif de déverrouillage (E₁) tout comme également l'au moins un autre dispositif de déverrouillage (E₂) agissent sur le dispositif de verrouillage (V), peut être retiré du support.

6. Ensemble d'appareils de protection contre les surtensions (1) selon l'une des revendications précédentes, **caractérisé en ce qu'**un mécanisme d'éjection (A) est disposé dans le support (H) lequel, à l'état déverrouillé, peut pousser un connecteur de dispositif de protection contre les surtensions (ÜSS) hors du support (H).

7. Ensemble d'appareils de protection contre les surtensions (1) selon la revendication 6, **caractérisé en ce que** le mécanisme d'éjection (A) est en liaison avec un dispositif de télécommunication.

8. Ensemble d'appareils de protection contre les surtensions (1) selon l'une des revendications précédentes, **caractérisé en ce que** le connecteur de dispositif de protection contre les surtensions (ÜSS) présente en outre un dispositif de déverrouillage à solliciter par une force externe.

9. Ensemble d'appareils de protection contre les surtensions (1) selon l'une des revendications précédentes, **caractérisé en ce que** le support (H) présente en outre un dispositif de déverrouillage (ME₂) à solliciter par une force externe.

10. Ensemble d'appareils de protection contre les surtensions (1) selon l'une des revendications précédentes, **caractérisé en ce que** le connecteur de dispositif de protection contre les surtensions (ÜSS) présente des dispositifs de connexion électrique (K₁, K₂), et que le support présente des dispositifs de connexion électrique (K₃, K₄) coopérant correspondants.

11. Ensemble d'appareils de protection contre les surtensions (1) selon la revendication 10, **caractérisé en ce que** les dispositifs de connexion électrique (K₃, K₄) coopérant dans le support (H) sont, en cas de connecteur de dispositif de protection contre les surtensions (ÜSS) non enfiché, protégés contre le contact par des dispositifs de verrouillage (V₁, V₂).

12. Ensemble d'appareils de protection contre les surtensions (1) selon la revendication 11, **caractérisé en ce que** les dispositifs de verrouillage (V₁, V₂) servent simultanément de dispositif de verrouillage (V) sollicité par une force.

13. Ensemble d'appareils de protection contre les surtensions (1) selon la revendication 11 ou 12, **caractérisé en ce que** les dispositifs de connexion électrique (K₁, K₂, K₃, K₄), ensemble avec les dispositifs de verrouillage (V₁, V₂), servent simultanément de dispositif de coupure à capacité d'extinction d'arc supérieure.

14. Ensemble d'appareils de protection contre les surtensions (1) selon l'une des revendications précédentes, **caractérisé en ce que** le connecteur de dispositif de protection contre les surtensions (ÜSS) présente en outre un fusible (F) lequel, lorsque le connecteur de dispositif de protection contre les surtensions (ÜSS) ne se trouve pas verrouillé dans le support (H), est connecté en série avec le dispositif de protection contre les surtensions (ÜSE), et lorsque le connecteur de dispositif de protection contre les surtensions (ÜSS) se trouve verrouillé dans le support (H), est inopérant.

15. Ensemble d'appareils de protection contre les surtensions (1) selon l'une des revendications 3 à 14, **caractérisé en ce que** le premier indicateur d'état (S₁) peut indiquer au moins un premier état (Z₁), un deuxième état (Z₂), et un troisième état (Z₃).

16. Ensemble d'appareils de protection contre les surtensions (1) selon l'une des revendications précédentes, **caractérisé en ce que** le premier état d'alerte indique un dysfonctionnement et/ou une expiration de durée de vie.
